# EUROPÄISCHE PATENTANMELDUNG

(11) **EP 3 296 247 A1**
(43) Veröffentlichungstag der Anmeldung: **21.03.2018**
(21) Anmeldenummer: 16188778.1
(22) Anmeldetag: 14.09.2016
(51) Int. Cl.: B66C 13/46, B66C 19/00

(54) **DETEKTION VON VERRIEGELUNGSVORRICHTUNGEN**

(71) Anmelder: Siemens Aktiengesellschaft, 80333 München (DE)
(72) Erfinder: Dobler, Thomas, 76770 Hatzenbühl (DE); Gerdhenrichs, Ralf, 91056 Erlangen (DE); Willhöft, Alexander, 90429 Nürnberg (DE)

(57) **Zusammenfassung**

Die Erfindung betrifft ein Verfahren zur Detektion einer Verriegelungsvorrichtung (LOCK) an einem beweglichen Objekt (C), wobei die Verriegelungsvorrichtung (LOCK) zur Verriegelung mehrerer beweglicher Objekte (C) untereinander und zur Anordnung in einem Verrieglungsbereich (L) des beweglichen Objekts (C) ausgebildet ist und wobei das bewegliche Objekt (C) zur Bewegung mittels einer Verladevorrichtung (100) ausgebildet ist. Des Weiteren betrifft die Erfindung eine Bildverarbeitungseinheit (PU), ein System zur Durchführung eines erfindungsgemäßen Verfahrens sowie ein automatisches Be- und/oder Entladesystem. Um Verriegelungsvorrichtungen (LOCK) effizient und zuverlässig zu erkennen wird vorgeschlagen, dass der Verriegelungsbereich (L) in einem Erfassungsbereich (SCAN) von mindestens einer Kamera (K1, K2) erfassbar ist und wobei eine Bildverarbeitungseinheit (PU) ein Signal (SIG) der Kamera (K1, K2) zur Detektion von Verriegelungsvorrichtungen (LOCK) in einem Verrieglungsbereich (L) eines beweglichen Objekts (C) auswertet.

## Beschreibung

Die Erfindung betrifft ein Verfahren zur Detektion von Verriegelungsvorrichtungen an einem beweglichen Objekt. Des Weiteren betrifft die Erfindung eine Bildverarbeitungseinheit, ein System zur Durchführung eines erfindungsgemäßen Verfahrens sowie ein automatisches Be- und/oder Entladesystem.

Ein derartiges Verfahren kommt beispielsweise in einem Kransystem zum Verladen von Containern zum Einsatz. Wird dort eine Containerverriegelung fälschlicherweise am Container vergessen, so kann der Container nicht ohne Weiteres weiter verladen werden. Es können sich dadurch Transportfahrzeuge oder Container verhaken. Dies kann unter Umständen zu erheblichen Beschädigungen der Kranmechanik, Fahrzeugen und Containern, bis hin zu Personenschäden führen. Wird ein Container mit einer vergessenen Verriegelung abgestellt, so steht dieser auf der Verriegelung und es stellt sich damit ein Schrägstand des Containers ein. Bisher ist es Aufgabe des Kranführers, solche vergessenen Verriegelungen zu erkennen. Um den Kranführer zu entlasten und um eine vollständige Automatisierung solcher Systeme zu erlauben wird im Folgenden ein Verfahren zur Detektion von Verriegelungsvorrichtungen vorgestellt.

Aus DE 10 2012 020 953 A1 ist ein Verfahren zur rechnergestützten Bestimmung der Position, in der ein ISO-Container mittels eines Krans auf ein Trägerfahrzeug aufzusetzen ist, anhand einer die Oberseite des Trägerfahrzeugs repräsentierenden Wolke von Messpunkten, die durch Abtasten des Trägerfahrzeugs von oben mit einem 3D-Laserscanner gewonnen werden bekannt. Dabei wird die Messpunktwolke mit mindestens einem virtuellen Prüfkörper abgetastet, der zumindest teilweise eine Form hat, die an die Form des über die Oberseite des Trägerfahrzeugs vorstehenden Teils von Twistlocks am Trägerfahrzeug angenähert ist. Ferner werden alle Orte ermittelt, an denen die an einen Twistlock angenäherte Form des virtuellen Prüfkörpers mindestens in einem vorbestimmten Grad mit der örtlichen Form der Messpunktwolke übereinstimmt und aus den so festgelegten Twistlock-Orten werden Container-Zielpositionsdaten für den auf das Trägerfahrzeug aufzusetzenden Container berechnet.

Der Erfindung liegt die Aufgabe zugrunde, ein Verfahren zur Verfügung zu stellen, das es ermöglicht Verriegelungsvorrichtungen effizient und zuverlässig zu erkennen.

Diese Aufgabe wird durch ein Verfahren mit den im Anspruch 1 angegebenen Merkmalen gelöst.

Unter Verriegelungsvorrichtung werden sowohl eine einzelne Verriegelungsvorrichtung, als auch mehrere Verriegelungsvorrichtungen verstanden. Daher wird im Folgenden von Detektion von Verriegelungsvorrichtungen oder Detektion einer Verriegelungsvorrichtung gesprochen, wobei damit alle möglichen Detektionsergebnisse abgebildet sind. Möglichen Detektionsergebnisse sind beispielsweise: "keine Verriegelungsvorrichtung wurde erkannt", "eine Verriegelungsvorrichtung wurde erkannt" oder "mehrere Verriegelungsvorrichtungen wurden erkannt". Wird das Verfahren also durchgeführt, um lediglich eine oder keine Verriegelungsvorrichtung zu detektieren, so ist dies ebenso erfindungsgemäß wie die Detektion mehrerer Verriegelungsvorrichtungen. Die Verriegelungsvorrichtungen sind dabei zur Verriegelung mehrerer beweglicher Objekte, z.B. Frachtcontainer, untereinander und/oder zur Verriegelung auf oder mit einem Objektträger und zur Anordnung in einem Verrieglungsbereich des beweglichen Objekts ausgebildet. Das bewegliche Objekt ist zur Bewegung mittels einer Verladevorrichtung ausgebildet und der Verriegelungsbereich ist in einem Erfassungsbereich von mindestens einer Kamera erfassbar. Zur Detektion einer Verriegelungsvorrichtung an einem beweglichen Objekt, insbesondere von sogenannten Twistlocks an Frachtcontainern, wertet eine Bildverarbeitungseinheit ein Signal der Kamera zur Detektion von Verriegelungsvorrichtungen in einem Verrieglungsbereich eines beweglichen Objekts aus. Ein Objektträger kann dabei beispielsweise ein Anhänger eines LKW oder weitere Träger sein, die zur Aufnahme eines oder zur Verriegelung mit einem beweglichen Objekt ausgebildet sind.

Der Verriegelungsbereich des beweglichen Objekts ist prinzipiell der Bereich, in dem Verriegelungsvorrichtungen angebracht werden. Bei Containern sind dies z.B. die äußeren Ecken, an denen die Twistlocks angebracht werden. Je nach Größe der Container und je nach Aufbau der Anlage sind eine oder mehrere Kameras so ausgerichtet, dass die beweglichen Objekte sich bei Transport mit der Verladevorrichtung durch den Erfassungsbereich der Kameras hindurchbewegen und dass der Verriegelungsbereich sich zumindest zum Zwecke der Detektion von Verriegelungsvorrichtungen zumindest teilweise und zumindest kurzzeitig im Erfassungsbereich befindet.

Der Erfassungsbereich ergibt sich im Wesentlichen anhand der Ausrichtung, der Auflösung und der Optik der Kamera. Der Erfassungsbereich muss also entsprechend gewählt werden. Pro Kranseite kann z.B. mindestens eine Kamera vorgesehen sein.

Besonders vorteilhaft ist es, wenn die Bildverarbeitungseinheit eine Fehlermeldung ausgibt, wenn eine Verriegelungsvorrichtung erkannt wurde. Diese Fehlermeldung kann dann beispielsweise über die PLC an den Kranführer weitergegeben werden, der dann entsprechende weitere Schritte einleitet. Die PLC kann auch selbsttätig auf eine derartige Fehlermeldung reagieren. Es ist ebenso denkbar, dass die Bildverarbeitungseinheit im Sinne einer erhöhten Sicherheit ein sog. "active high", also einen dauerhaft aktiven Logikpegel, ausgibt. Dazu wird kontinuierlich signalisiert, dass keine Verriegelungsvorrichtung erkannt wurde. Wenn eine Verriegelungsvorrichtung erkannt wird, so fällt das "active high" weg und eine Fehlermeldung kann ausgegeben werden.

In einer weiteren Ausführungsform wertet die Bildverarbeitungseinheit das Signal der Kamera, bzw. das Signal der Kameras, zur Überprüfung der korrekten Position des beweglichen Objekts aus. Dies ermöglicht es zu erkennen, ob das bewegliche Objekt in einer zur Detektion einer Verriegelungsvorrichtung geeigneten Position befindet. Die Positionsdaten können dabei beispielsweise anhand von eingelernten standardisierten Größen von bewegten Objekten erlernt werden. Es ist ebenso denkbar, dass für jedes aktuell bewegte Objekt in einem zentralen Logistiksystem die entsprechenden Maße hinterlegt sind, die der Bildverarbeitungseinheit zur Überprüfung der korrekten Position des beweglichen Objekts zur Verfügung gestellt werden. Insbesondere bei Containern bietet es sich an, Standardmaße in der Bildverarbeitungseinheit einzulernen oder zu hinterlegen. Es ist auch denkbar diese Standardmaße an anderen Speicherorten zu hinterlegen, auf die von der Bildverarbeitungseinheit zugegriffen werden kann.

In einer besonders vorteilhaften Ausführungsform wertet die Bildverarbeitungseinheit das Signal der Kamera mittels einer Blob-Analyse aus. Die Blob-Analyse ist dabei eine Möglichkeit, Objekte als sogenannte Blobs zu erfassen und diese vom Hintergrund im Bild zu unterscheiden. Besonders vorteilhaft ist es weiterhin, wenn die Blob-Analyse im gesamten Graustufenbereich erfolgt, um unterschiedliche Lichteinflüsse, wie beispielsweise Sonne, Schatten, Regen, künstliche Beleuchtung usw., zu berücksichtigen. Mit der Blob-Analyse kann dabei beispielsweise die Positionierung und die Größe des bewegten Objekts bestimmt und mit einer Referenzposition/-größe verglichen werden.

Weiterhin ist besonders vorteilhaft, wenn die Bildverarbeitungseinheit das Signal der Kamera mittels einer Differenzbildauswertung auswertet. Wurde beispielsweise eine eindeutige Position ermittelt, so kann mittels einer Differenzbildauswertung die Auswertung des Bildbereiches unterhalb der unteren Containerecken, in denen sich beispielsweise ein Twistlock befinden kann, durchgeführt werden. Es werden also die Verrieglungsbereiche, die sich nun im Erfassungsbereich der Kamera bzw. der Kameras befinden mittels einer Differenzbildauswertung auf Vorhandensein einer Verriegelungsvorrichtung untersucht. Eine Differenzbildauswertung setzt dabei voraus, dass sich der Container bewegt (min. Pixel per Movement). Besonders vorteilhaft ist dabei, dass bei Kombination der Blob-Analyse mit der Differenzbildauswertung das System automatisch eine Positionsänderung bzw. eine Bewegung durch XY-Auswertung der Blob-Analyse erkennen kann und damit sofort auf Fahrstopps beim Verladen reagieren kann, ohne falsche Alarme auszulösen.

In einer weiteren vorteilhaften Ausführungsform unterbricht eine Steuerung einen Be- und/oder Entladeprozess, wenn eine Verriegelungsvorrichtung erkannt wurde. Die Steuerung kann dabei eine zentrale Steuerung bspw. in Form einer PLC sein, die den gesamten Be- und/oder Entladeprozess steuert. Es ist aber ebenso denkbar, dass die Steuerung lediglich dem Kranführer ein entsprechendes Signal ausgibt, das dieser dann bestätigen muss. Der Be- und/oder Entladeprozess kann dann fortgeführt werden, wenn die fälschlich angebrachte Verriegelungsvorrichtung entfernt wurde oder das bewegliche Objekt, also z.B. der Container, an einen Ort zum Entfernen der Verriegelungsvorrichtung transportiert wurde.

In einer weiteren vorteilhaften Ausführungsform wertet die Bildverarbeitungseinheit nur dann ein Signal von der Kamera aus, wenn sich das bewegliche Objekt im Erfassungsbereich befindet. Auf diese Art und Weise müssen die Signale der Kameras, also das Bild bzw. die Bilder der Kameras, nicht dauerhaft ausgewertet werden. Dies verringert unnötigen Traffic über das Netzwerk des Steuerungssystems. Wird nun beispielsweise erkannt, dass sich ein bewegliches Objekt in einem Erfassungsbereich der Kamera hinein bewegt, so kann die Detektion ausgeführt werden. Die Information, ob sich ein bewegliches Objekt im Erfassungsbereich befindet, kann dabei beispielsweise von einer zentralen Steuerung, die die Position überwacht, geliefert werden und zur Triggerung oder zur Plausibilisierung verwendet werden.

In einer weiteren Ausführungsform werden der Bildverarbeitungseinheit Klassifizierungsdaten des aktuellen beweglichen Objekts zur Detektion von Verriegelungsvorrichtungen zur Verfügung gestellt. Die Klassifizierungsdaten können dabei die Art und Form des beweglichen Objekts umfassen. Dabei sind beispielsweise die Außenmaße vom Container, u.U. sogar die Farben sowie potenzielle Orte von Verriegelungsvorrichtungen denkbar. Die Bildverarbeitungseinheit kann so anhand der Klassifizierungsdaten die Erkennung von vergessenen Verriegelungsvorrichtungen noch effizienter durchführen. Die Klassifizierungsdaten können von einer Steuerung, einem zentralen Logistiksystem, oder Datenbanken über ein Kommunikationssystem zur Verfügung gestellt werden.

In einer weiteren Ausführungsform werden detektierte Verriegelungsvorrichtungen automatisiert entfernt. Es ist denkbar, dass dazu das bewegliche Objekt an einen weiteren Ort transportiert wird, an dem mittels eines Automaten Verriegelungsvorrichtungen automatisch oder manuell entfernt werden können. Es ist ebenso denkbar, dass ein kleiner Roboter z.B. in Form von einem oder mehreren Roboterarmen oder weiteren Lösungen die Verriegelungsvorrichtungen direkt im Erkennungsbereich entfernt. Dies hätte den Vorteil, dass eine Bestätigung des Entfernens der Verriegelungsvorrichtungen direkt durch das Verfahren selbst durchgeführt werden könnte. Dabei ist es denkbar, dass das Entfernen entsprechend schnell gestaltet wird, um den Verladeprozess nicht unterbrechen zu müssen, alternativ ist es ebenso möglich, den Verladeprozess zumindest kurz zu unterbrechen, um ein sicheres Entfernen der Verriegelungsvorrichtungen zu ermöglichen.

In einer besonders vorteilhaften Ausführungsform wird das Entfernen von detektierten Verriegelungsvorrichtungen in einem zentralen Logistiksystem dokumentiert. Das zentrale Logistiksystem hat Informationen über die Herkunft und über den finalen Verbleib der beweglichen Objekte. Wird nun durch das Entfernen einer Verriegelungsvorrichtung das bewegliche Objekt an einer anderen Stelle eingereiht, so kann das zentrale Logistiksystem direkt darauf reagieren und eine lückenlose Lieferdokumentation kann garantiert werden.

In einer weiteren Ausführungsform ermittelt die Bildverarbeitungseinheit eine Kennung des beweglichen Objekts. Die Kennung kann dabei z.B. eine Containernummer nach ISO 6346 eines Containers sein. Auf diese Art und Weise können entweder bestehende Daten aus einem zentralen Logistiksystem verifiziert werden und im Zweifel aktualisiert werden, oder direkt eine Zuordnung der entladenen Güter zu zentrale Logistikdaten durchgeführt werden.

Die Aufgabe wird weiterhin durch eine Bildverarbeitungseinheit zur Durchführung eines erfindungsgemäßen Verfahrens gelöst. Die Bildverarbeitungseinheit weist dazu zumindest eine Signal-Schnittstelle, eine Kommunikationsschnittstelle sowie eine Auswerteeinheit auf, wobei die Signalschnittstelle zum Anschluss von zumindest einer Kamera ausgebildet ist, wobei die Kommunikationsschnittstelle zur Kommunikation mit zumindest einer Steuerung ausgebildet ist und wobei die Auswerteeinheit zur Auswertung eines Signals der zumindest einen Kamera zur Detektion einer Verrieglungsvorrichtung ausgebildet ist. Eine solche Bildverarbeitungseinheit kann als eigenständige Einheit, als Teil eine PLC oder sogar cloudbasiert ausgebildet sein. Die Schnittstellen können dabei Standard-Ethernet, Industriestandard-Schnittstellen oder weitere spezifische Schnittstellen sein.

Die Aufgabe wird weiterhin durch ein System zur Detektion von Verriegelungsvorrichtungen an einem beweglichen Objekt gelöst, das zumindest eine Bildverarbeitungseinheit und zumindest eine Kamera aufweist. Die Kameras sind dabei so auszurichten, dass der Verriegelungsbereich eines beweglichen Objekts bei Bewegung mittels einer Verladevorrichtung in einem Erfassungsbereich von mindestens einer Kamera erfassbar ist.

In einer vorteilhaften Weiterbildung eines Systems, ist die zumindest eine Kamera derart ausgerichtet, dass durch die Ausrichtung eine Sonneneinstrahlung während des Betriebs verhindert wird. Beispielsweise kann die Kamera in Richtung der Himmelsrichtung ausgerichtet sein, aus der während des Betriebs keine Sonnenstrahlung zu erwarten ist. Auch automatische Reinigungssysteme zur Reinigung der Kameraoptik um optische Störungen zu verringern sind denkbar.

In einer vorteilhaften Weiterbildung eines Systems, ist die zumindest eine Kamera in einem Neigungswinkel nach unten, insbesondere in einem Neigungswinkel von 20 bis 30 Grad nach unten, ausgerichtet. Dies ist besonders Vorteilhaft, da so sowohl die Sonneneinstrahlung als auch weitere Wettereinflüsse minimiert werden.

Die Aufgabe wird weiterhin durch ein Automatisches Be- und/oder Entladesystem gelöst, das mindestens ein System zur Durchführung eines erfindungsgemäßen Verfahrens, eine Verladevorrichtung zur Bewegung eines beweglichen Objekt und eine Steuerung zur Steuerung eines Be- und/oder Entladeprozesses aufweist. Eine derartige Integration ist besonders Vorteilhaft, da so eine nahtlose Integration in den Logistikfluss bestehender Anlagen vorgenommen werden kann. Die Fehlerwahrscheinlichkeit einer solchen Anlage reduziert sich dementsprechend und die Verfügbarkeit kann gesteigert werden.

Im Folgenden wird die Erfindung anhand der in den Figuren dargestellten Ausführungsbeispiele näher beschrieben und erläutert. Es zeigen:
- FIG1: eine Verladevorrichtung in Form eines Containerkrans mit einem System zur Detektion von Verriegelungsvorrichtungen und
- FIG2: beispielhaft die Detektion einer Verriegelungsvorrichtung.

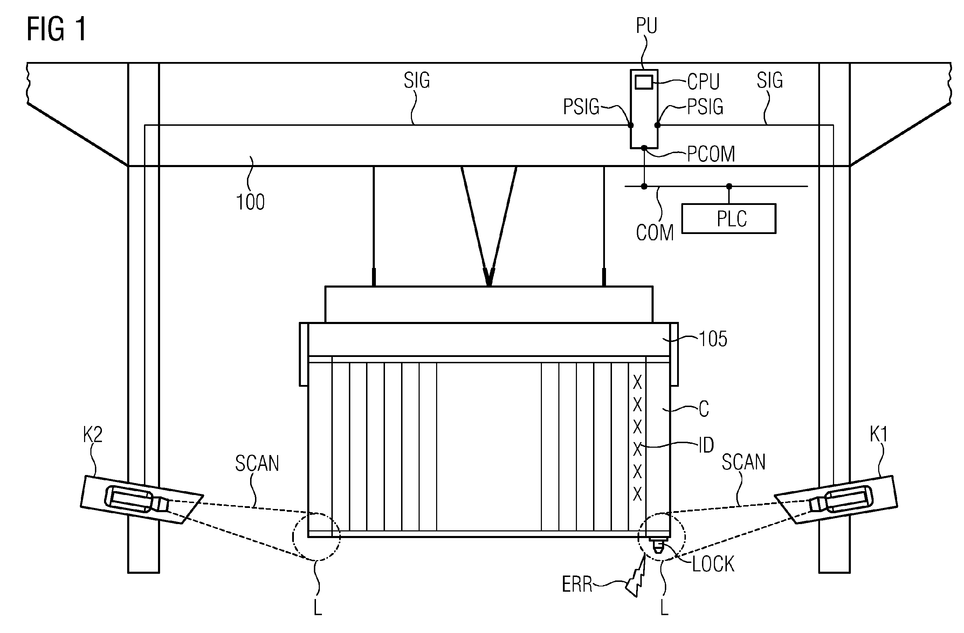

FIG 1 zeigt eine Verladevorrichtung 100 in Form eines Containerkrans, die zum Verladen von beweglichen Objekten C, in diesem Fall in Form von Containern, ausgebildet ist. Die Verladevorrichtung 100 weist dazu ein Hebezeug 105, auch Spreader genannt, auf. Zur Steuerung der Verladevorrichtung 100 ist eine Steuerung PLC vorgesehen. Die Steuerung PLC weist eine Kommunikationsverbindung COM zu einer Kommunikationsschnittstelle PCOM einer Bildverarbeitungseinheit PU auf. Die Bildverarbeitungseinheit PU weist des Weiteren zwei Signalschnittstellen PSIG sowie eine Auswerteeinheit CPU auf. Die Kommunikationsverbindung COM kann dabei vorzugsweise als IP basierte Verbindung ausgebildet sein, es sind aber ebenso weitere Protokolle denkbar. Die Signalschnittstellen PSIG sind zum Empfang eines Signals SIG von Kameras K1, K2 ausgebildet. Die Kameras K1, K2 weisen jeweils einen Erfassungsbereich SCAN auf, der durch deren Ausrichtung eingestellt werden kann. In diesem Fall sind die Kameras K1 und K2 in einer leichten Neigung nach unten ausgerichtet, so dass sie zuverlässig Verriegelungsvorrichtungen LOCK an der Unterseite der beweglichen Objekte C detektieren können. Im Erfassungsbereich SCAN befinden sich in diesem Fall Verriegelungsbereiche L des beweglichen Objekts C, wobei sich im rechten Verriegelungsbereich L eine Verriegelungsvorrichtung LOCK befindet und im linken Verriegelungsbereich L keine Verriegelungsvorrichtung vorhanden ist. Mit dem blitzförmigen Pfeil ERR ist angedeutet, dass es sich bei dem Vorhandensein der Verriegelungsvorrichtung LOCK im rechten Verriegelungsbereich L um einen Fehler ERR handelt. Würde nun das abgebildete bewegliche Objekt C, also der Container, auf diese Art und Weise weiterverladen werden, so würde sich ein Schrägstand des Containers oder im schlimmsten Fall sogar eine teilweise Verriegelung mit einem weiteren Container einstellen, die bis hin zu Personenschäden führen kann.

Im dargestellten Zustand befindet sich das bewegliche Objekt C mit seinen Verriegelungsbereichen L in den Erfassungsbereichen SCAN. Um zur Erfassung von Verriegelungsvorrichtungen LOCK zuverlässig eine Deckung der Erfassungsbereiche SCAN der Kameras K1, K2 mit den Verriegelungsbereichen L zu erreichen, könnten Daten, die beispielsweise von einem zentralen Logistiksystem kommen, und die Maße eines bewegten Objekts C beinhalten, zu einer Positionierung über die PLC verwendet werden. Es ist ebenso denkbar, dass die Bildverarbeitungseinheit PU automatisch erkennt, wenn ein Verriegelungsbereich L durch den Erfassungsbereich SCAN bewegt wird.

Zur Detektion von Twistlocks ist es ideal, wenn jeweils die beiden unteren Ecken (Twistlock Verschraubungslöcher) im Erfassungsbereich SCAN der Kameras K1, K2 liegen. Die Kameras K1, K2 können z.B. in einem Wetterschutzgehäuse mit Sonnendach in einem Winkel von ca. 25° nach unten installiert sein, um eine Beeinträchtigung der Bilderkennung durch Sonne und Regen auch über einen längeren Zeitraum möglichst gering zu halten. Die Bildinformationen, also das Signal SIG der Kameras K1, K2 werden der Bildverarbeitungseinheit PU über die Kommunikationsverbindung zur Verfügung gestellt. Die Bildverarbeitungseinheit PU ist dabei z.B. auf dem Kran installiert und kann das Signal SIG der Kameras K1, K2, also beispielsweise die Bilder, digital oder analog einlesen, verarbeiten und die Detektions-Ergebnisse an die Steuerung PLC weitergeben.

Die Detektionssicherheit zur Erkennung einer nicht entfernten Verriegelungsvorrichtung ist abhängig von der Qualität der von den Kameras K1, K2 gelieferten Signale SIG. Daher ist ein Wartungsintervall zu berücksichtigen, in dem die Kameras K1, K2 gereinigt werden. Durch Einsatz von zusätzlichen Hilfsmitteln wie Scheibenwischanlage und Spritzwassertank, kann die Wartung auch von der Steuerung PLC angesteuert werden.

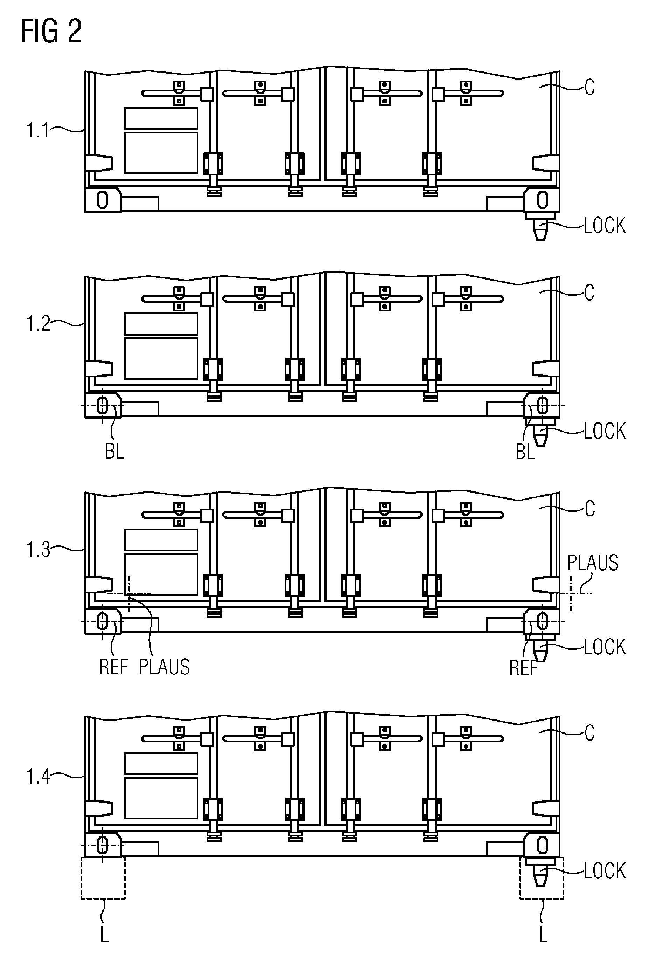

FIG 2 zeigt schematisch einen möglichen Ablauf einer Detektion von Verriegelungsvorrichtungen. Dazu sind bewegliche Objekte C in die Schritte 1.1 bis 1.4 aufgeteilt. Die Reihenfolge ist dabei nicht verbindlich. Die Bezugszeichen der Elemente aus FIG 1 werden weiterhin verwendet.

Im Schritt 1.1 ist ein bewegliches Objekt C zu sehen, das eine Verriegelungsvorrichtung LOCK, die scheinbar nicht korrekt entfernt wurde, aufweist. Dieses bewegliche Objekt C wird nun mit einer Verladevorrichtung 100, die der Übersichtlichkeit halber nicht gezeigt ist, verladen.

Im Schritt 1.2 wurde in diesem Fall durch eine Blob-Analyse eine Vermessung bzw. eine Positionsbestimmung des beweglichen Objekts C durchgeführt. Die durch die Blob-Analyse gesetzten Marker BL können in diesem Fall beispielsweise die Ecken eines beweglichen Objekts C markieren, an denen prinzipiell eine Verriegelungsvorrichtung LOCK zu erwarten ist.

Um die Kommunikationsverbindung COM nicht unnötig zu belasten, sollte die Detektion nicht ständig arbeiten. Die eindeutige Triggerung kann von den bekannten Koordinaten der Verladevorrichtung 100 bzw. dessen Hebezeug 105 abgeleitet werden. Bei diesem Vorgang ist gewährleistet, dass sich das bewegliche Objekt C, also der Container, zumindest teilweise im Erfassungsbereich SCAN der Kameras K1, K2 befindet. Die Detektion läuft während des gesamten Vorgangs und wird beim Erreichen einer bestimmten Position des beweglichen Objekts 100 wieder beendet.

Im Schritt 1.3 wird eine Plausibilitätsprüfung mittels eingelernten Referenzpositionen REF durchgeführt. Beispielsweise ist dies anhand von konstanten und/oder bekannten Breiten von beweglichen Objekten C, wie genormte Containerbreiten, die hier als Referenzposition REF dargestellt werden. Des Weiteren ist eine Plausibilitätsposition PLAUS eingezeichnet, mit der beispielsweise eine zulässige Abweichung von der Referenzposition REF indiziert werden kann. Beispielsweise wäre eine solche zulässige Abweichung mittels eines entsprechend großen Erfassungsbereichs SCAN der Kameras K1, K2 zu realisieren. Der Detektion zu Grunde liegt bisher eine Blob-Analyse zur Vermessung bzw. Positionsbestimmung eines beweglichen Objekts C, wie es im Schritt 1.2 durchgeführt wurde. Die Blob-Analyse kann im gesamten Graustufenbereich erfolgen, um unterschiedliche Lichteinflüsse durch Sonne, Schatten, Regen, Beleuchtungsstrahler etc. zu berücksichtigen. Im Schritt 1.3 wurde die Positionsbestimmung anhand von Plausibilitätspositionen PLAUS und Referenzpositionen REF verifiziert.

Im Schritt 1.4 werden nun durch eine Differenzbildauswertung Verriegelungsbereiche L festgelegt und ausgewertet. Der linke Verriegelungsbereich L enthält dabei keine Verriegelungsvorrichtung, der rechte Verriegelungsbereich L enthält dabei fälschlicherweise eine Verriegelungsvorrichtung LOCK. Wurde die eindeutige Position gemäß den vorigen Schritten 1.1 bis 1.3 ermittelt, kann mittels der Differenzbildverarbeitung die Auswertung des Bildbereiches unterhalb der unteren Containerecken, in dem sich ein Twistlock befinden kann, durchgeführt werden. Eine Differenzbildauswertung setzt voraus, dass sich der Container bewegt (min. Pixel per Movement). Das System erkennt automatisch eine Positionsänderung/Bewegung durch X/Y-Auswertung der Blob-Analyse und kann damit auf FahrStopps beim Verladen reagieren ohne Falschalarme auszulösen.

Die Detektions-Ergebnisse der einzelnen Detektions-Schritte durchlaufen mehrere Plausibilitätsprüfungen bezogen auf eindeutig eingelernte Referenzinformationen wie Abstand (bezieht sich jeweils auf eine konstante Breite bzw. Länge eines beweglichen Objekts C, z.B. eines Containers) und z.B. die Positionshöhe, die nur in einem minimalen Bereich variieren darf. Das Einlernen kann einmalig bei der Inbetriebnahme des Systems erfolgen. Es ist denkbar, dass das System mittels eines Referenzobjekts regelmäßig kalibriert wird. Mit zusätzlichen Informationen aus der Kranautomatisierung wie: Container-Typ 20"/40"/45", Höhe normal/high/cube können unterschiedliche Detektions-Projekte angelegt werden um Störeinflüsse zu minimieren. Mit Hilfe der Plausibilitätsprüfungen können falsch erkannte Positionen, verursacht durch Schmutz, Wettereinfluss etc. verworfen und damit die Stabilität der Auswertung erhöht werden.

Zusammenfassend betrifft die Erfindung ein Verfahren zur Detektion von Verriegelungsvorrichtungen LOCK an einem beweglichen Objekt C, wobei die Verriegelungsvorrichtungen LOCK zur Verriegelung mehrerer beweglicher Objekte C untereinander und zur Anordnung in einem Verrieglungsbereich L des beweglichen Objekts C ausgebildet sind, wobei das bewegliche Objekt C zur Bewegung mittels einer Verladevorrichtung 100 ausgebildet ist. Des Weiteren betrifft die Erfindung eine Bildverarbeitungseinheit PU, ein System zur Durchführung eines erfindungsgemäßen Verfahrens sowie ein automatisches Be- und/oder Entladesystem. Um Verriegelungsvorrichtungen LOCK effizient und zuverlässig zu erkennen wird vorgeschlagen, dass der Verriegelungsbereich L in einem Erfassungsbereich SCAN von mindestens einer Kamera K1, K2 erfassbar ist und wobei eine Bildverarbeitungseinheit PU ein Signal SIG der Kamera K1, K2 zur Detektion von Verriegelungsvorrichtungen LOCK in einem Verrieglungsbereich L eines beweglichen Objekts C auswertet.

## Patentansprüche

1. Verfahren zur Detektion einer Verriegelungsvorrichtung (LOCK) an einem beweglichen Objekt (C),
wobei die Verriegelungsvorrichtung (LOCK) zur Verriegelung mehrerer beweglicher Objekte (C) untereinander und/oder zur Verriegelung auf einem Objektträger, wobei die Verriegelungsvorrichtung (LOCK) zur Anordnung in einem Verrieglungsbereich (L) des beweglichen Objekts (C) ausgebildet ist,
wobei das bewegliche Objekt (C) zur Bewegung mittels einer Verladevorrichtung (100) ausgebildet ist,
wobei der Verriegelungsbereich (L) in einem Erfassungsbereich (SCAN) von mindestens einer Kamera (K1, K2) erfassbar ist und wobei eine Bildverarbeitungseinheit (PU) ein Signal (SIG) der Kamera (K1, K2) zur Detektion von Verriegelungsvorrichtungen (LOCK) in einem Verrieglungsbereich (L) des beweglichen Objekts (C) auswertet.

2. Verfahren nach Anspruch 1, wobei die Bildverarbeitungseinheit (PU) eine Fehlermeldung (ERR) ausgibt, wenn eine Verriegelungsvorrichtung (LOCK) erkannt wurde.

3. Verfahren nach Anspruch 1 oder 2, wobei die Bildverarbeitungseinheit (PU) das Signal (SIG) der Kamera (K1, K2) zur Überprüfung der korrekten Position (POS) des beweglichen Objekts (C) auswertet.

4. Verfahren nach einem der vorhergehenden Ansprüche, wobei die Bildverarbeitungseinheit (PU) das Signal (SIG) der Kamera (K1, K2) mittels einer Blob-Analyse auswertet.

5. Verfahren nach einem der vorhergehenden Ansprüche, wobei die Bildverarbeitungseinheit (PU) das Signal (SIG) der Kamera (K1, K2) mittels einer Differenzbildauswertung auswertet.

6. Verfahren nach einem der vorhergehenden Ansprüche, wobei eine Steuerung (PLC) einen Be- und/oder Entladeprozess unterbricht, wenn eine Verriegelungsvorrichtung (LOCK) erkannt wurde.

7. Verfahren nach einem der vorhergehenden Ansprüche, wobei die Bildverarbeitungseinheit (PU) nur dann ein Signal (SIG) von der zumindest einen Kamera K1, K2) auswertet, wenn sich das bewegliche Objekt (C) in zumindest einem Erfassungsbereich (SCAN) befindet.

8. Verfahren nach einem der vorhergehenden Ansprüche, wobei der Bildverarbeitungseinheit (PU) Klassifizierungsdaten des aktuellen beweglichen Objekts (C) zur Verfügung gestellt werden.

9. Verfahren nach einem der vorhergehenden Ansprüche, wobei detektierte Verriegelungsvorrichtungen (LOCK) automatisiert vom beweglichen Objekt (C) entfernt werden.

10. Verfahren nach einem der vorhergehenden Ansprüche, wobei das Entfernen von detektierten Verriegelungsvorrichtungen (LOCK) von beweglichen Objekten (C) in einem zentralen Logistiksystem dokumentiert wird.

11. Verfahren nach einem der vorhergehenden Ansprüche, wobei die Bildverarbeitungseinheit (PU) eine Kennung (ID) des beweglichen Objekts (C) ermittelt.

12. Bildverarbeitungseinheit (PU) zur Durchführung eines Verfahrens nach einem der Ansprüche 1 bis 11, aufweisend zumindest eine Signal-Schnittstelle (PSIG), eine Kommunikationsschnittstelle (PCOM) sowie eine Auswerteeinheit (CPU), wobei die Signalschnittstelle (PSIG) zum Anschluss von zumindest einer Kamera (K1, K2) ausgebildet ist, wobei die Kommunikationsschnittstelle (PCOM) zur Kommunikation mit zumindest einer Steuerung (PLC) ausgebildet ist und wobei die Auswerteeinheit (CPU) zur Auswertung eines Signals (SIG) der zumindest einen Kamera zur Detektion einer Verrieglungsvorrichtung (LOCK) ausgebildet ist.

13. System zur Detektion von Verriegelungsvorrichtungen (LOCK) an einem beweglichen Objekt (C), aufweisend zumindest eine Bildverarbeitungseinheit (PU) nach Anspruch 12 und zumindest eine Kamera (K1, K2).

14. System nach Anspruch 13, wobei die zumindest eine Kamera (K1, K2) derart ausgerichtet ist, dass durch die Ausrichtung eine Sonneneinstrahlung während des Betriebs verhindert wird.

15. System nach Anspruch 13 oder 14, wobei die zumindest eine Kamera (K1, K2) in einem Neigungswinkel nach unten, insbesondere in einem Neigungswinkel von 20 bis 30 Grad nach unten, ausgerichtet ist.

16. Automatisches Be- und/oder Entladesystem aufweisend mindestens ein System gemäß einem der Ansprüche 13 bis 15, eine Verladevorrichtung (100) zur Bewegung eines beweglichen Objekt (C) und eine Steuerung (PLC) zur Steuerung eines Be- und/oder Entladeprozesses.
